Europäisches Patentamt

European Patent Office

Office européen des brevets

(11) Veröffentlichungsnummer: **0 235 604**

**A1**

(12) # EUROPÄISCHE PATENTANMELDUNG

(21) Anmeldenummer: 87101527.7

(22) Anmeldetag: 05.02.87

(51) Int. Cl.⁴: **A01K 93/00**

(30) Priorität: 05.03.86 DE 3607112

(43) Veröffentlichungstag der Anmeldung:
09.09.87 Patentblatt 87/37

(84) Benannte Vertragsstaaten:
AT CH DE ES FR GB IT LI

(71) Anmelder: **Heitz, Walter-Helmut**
**Hoher Holzweg 22**
**D-3005 Hemmingen/Arnum(DE)**

(72) Erfinder: **Heitz, Walter-Helmut**
**Hoher Holzweg 22**
**D-3005 Hemmingen/Arnum(DE)**

(74) Vertreter: **Thömen, Uwe, Dipl.-Ing.**
**Patentanwalt U. Thömen Zeppelinstrasse 5**
**D-3000 Hannover(DE)**

(54) **Pose für den Angelsport.**

(57) Bei Posen für den Angelsport, die zur Verwendung während der Nacht mit einer Lichtquelle versehen sind, besteht der Nachteil, daß die zugehörige Batterie nur eine geringe Lebensdauer besitzt und dementsprechend häufig ausgewechselt werden muß. Außerdem ist es sehr aufwendig, die Leuchtquelle durch Verdrehen der beiden den Schwimmkörper bildenden Posenhälften nach Art eines Schalters mit der Batterie zu verbinden bzw. die Verbindung zu unterbrechen.

Bei der neuen Pose wird die Lichtquelle (22) von einer Blinkschaltung (30) angesteuert, wodurch die Lebensdauer der Batterie (28) um ein Vielfaches erhöht wird. Zum Einschalten der Batterie (28) wird ein feuchtigkeitsempfindlicher elektronischer Schalter (26) verwendet, der die Lichtquelle (22) automatisch über die Blinkschaltung (30) einschaltet, wenn sich die Pose im Wasser befindet.

FIG. 1

FIG. 3

EP 0 235 604 A1

## Pose für den Angelsport

Die Erfindung betrifft eine Pose für den Angelsport, mit einer Lichtquelle, die zur Verwendung als Nachtpose über eine Schaltvorrichtung an eine Batterie anschließbar ist, sowie mit einem Schwimmkörper.

Bekanntlich ist man beim Angeln an keine Tageszeit gebunden, vielmehr wird auch häufig während der Nachtzeit geangelt. Damit der Angler in diesem Fall die Position der Pose erkennen kann, ist es schon bekannt geworden, die Pose mit einer Lichtquelle in Form einer Leuchtdiode zu versehen.

Zum Betrieb der Leuchtdiode dient eine innerhalb der Pose befindliche Batterie, die über eine Schaltvorrichtung elektrisch mit der Lichtquelle verbunden werden kann. Die Schaltvorrichtung ist aus praktischen Gründen unbedingt erforderlich, denn andernfalls -bei einer dauernden Verbindung zwischen Batterie und Lichtquelle -würde sich die Batterie zu rasch entleeren. Zudem braucht die Leuchtdiode nicht eingeschaltet zu werden, wenn die Pose nicht als Nacht-, sondern als Tagespose verwendet wird.

Die bekannten Posen sind durch zwei Hälften gebildet, die zur Bildung der kompletten Pose etwa mittig miteinander wasserdicht verschraubt werden. Beim Verschrauben bewegen sich die beiden Hälften aufeinander zu, und diese Bewegung hat man dazu ausgenutzt, um die Batterie in elektrischen Kontakt mit der Leuchtdiode zu bringen. Bei fest miteinander verschraubten Hälften drückt die Batterie gegen eine Kontaktfeder, wodurch die elektrische Verbindung mit der Leuchtdiode hergestellt wird. Wenn demgegenüber die Schraubbewegung um einige Umdrehungen gelöst wird und sich die beiden Hälften voneinander entfernen, wird die elektrische Verbindung aufgehoben, so daß die Leuchtdiode ausgeschaltet ist.

Diese bekannte Realisierung der Schaltvorrichtung für die Leuchtdiode hat sich in der Praxis bezüglich der Handhabung als äußerst umständlich erwiesen, da für das Ein-bzw. Ausschalten jeweils mehrere Handgriffe für das teilweise Lösen der Schraubverbindung erforderlich sind.

Außerdem ist die bekannte Konstruktion als sehr aufwendig einzustufen, weil die eine Hälfte des Schwimm körpers mit einem Innengewinde und die andere Hälfte nach Art einer entsprechenden Schraube ausgebildet werden muß. Dadurch verteuert sich zudem die Herstellung der beiden Hälften für die Pose.

Es besteht aber noch ein weiterer gravierender Nachteil bei der bekannten Pose mit Leuchtdiode und Batterie. Die Lebensdauer der Batterie, die aufgrund der vorgegebenen Abmessungen der Pose ebenfalls nur klein ausgebildet sein darf, ist nämlich relativ gering. Es ist daher erforderlich, kleine Spezialbatterien zu verwenden. Die Lebensdauer dieser Batterien liegt in der Praxis bei etwa 25 -30 Stunden, so daß der Benutzer die Batterie bei der Benutzung als Nachtpose schon nach einigen Wochen erneuern bzw. auswechseln muß.

Die benötigten Spezialbatterien sind -im Vergleich zum Gesamtpreis der kompletten Pose - relativ teuer, so daß nach beispielsweise zweimaligem Auswechseln der Batterie bereits die Gesamtkosten der Pose erreicht sind.

Neben der erwähnten umständlichen Handhabung der bekannten Posen sind diese auch insbesondere in wirtschaftlicher Hinsicht als nachteilig einzustufen.

Hier greift nun die Erfindung ein, der die Aufgabe zugrunde liegt, eine Pose der im Oberbegriff des Anspruchs 1 genannten Art zu schaffen, die sich durch eine einfache Handhabung und durch große Wirtschaftlichkeit auszeichnet.

Dieses Ziel erreicht die Erfindung dadurch, daß die Lichtquelle von einer Blinkschaltung angesteuert ist, und daß die Schaltvorrichtung durch einen feuchtigkeitsempfindlichen elektronischen Schalter gebildet ist.

Durch die Blinkschaltung wird in vorteilhafter Weise ein die Batterie rasch entleerender Dauerbetrieb der Lichtquelle vermieden, mit der Folge, daß die Lebensdauer der Batterie um ein Vielfaches erhöht werden kann. Blinkschaltungen stehen bekanntlich in Form integrierter Schaltungen mit sehr geringen Abmessungen zur Verfügung, d. h., es ist ohne weiteres möglich, die Blinkschaltung ohne großen Platzbedarf und mit geringem Gewicht innerhalb der Pose unterzu bringen.

Ein weiterer bedeutsamer Aspekt der Erfindung liegt in der Ausbildung der Schaltvorrichtung als feuchtigkeitsempfindlicher elektronischer Schalter, welcher es möglich macht, die Leuchtquelle immer dann automatisch mit der Batterie zu verbinden, wenn sich die Pose ihrer Zweckbestimmung entsprechend im Wasser befindet. Wird die Pose aus dem Wasser entfernt, schaltet sich die Leuchtquelle automatisch wieder ab. Für den Benutzer ergibt sich daraus der Vorteil, auf jedwelche Handhabung für die Betätigung der Schaltvorrichtung verzichten zu können. Das Ein-bzw. Ausschalten der Leuchtdiode erfolgt automatisch, wenn die Pose ins Wasser gebracht wird, bzw. wenn sie daraus entfernt wird. Neben der einfachen Handhabung kommt hier auch noch eine merkbare Erhöhung der Lebensdauer der Batterie hinzu, weil vermieden wird, daß die Leuchtquelle eingeschaltet ist, wenn sich die Pose nicht im Wasser befindet.

In zweckmäßiger Ausgestaltung umfaßt die Pose einen inneren rohrförmigen Basiskörper, der sich oben und unten bis außerhalb des Schwimmkörpers erstreckt, und der die Lichtquelle, die Batterie, die Blinkschaltung sowie den elektronischen Schalter als integrierter Bestandteil umfaßt. Der Basiskörper ist vorzugsweise als einteiliger geschlossener Körper mit den genannten Bestandteilen ausgebildet, wobei im unteren Teil zwei Kontaktflächen das elektronischen Schalters angeordnet sind, die sich unterhalb der Wasseroberfläche befinden, wenn die Pose ins Wasser gebracht wird.

Eine besonders zweckmäßige Ausgestaltung der Erfindung sieht ferner vor, daß der Schwimmkörper der Pose durch zwei hohle Schalenhälften gebildet ist, die von oben bzw. von unten her auf den Basiskörper wasserdicht aufgeschoben und an ihrer Verbindungsstelle wasserdicht miteinander verklebt werden können.

In vorteilhafter Weise ist es auch möglich, die Abdichtung und das Zusammenkleben der beiden Schalenhälften sehr einfach und sicher durch Ausschäumen der auf den Basiskörper aufgeschobenen Schalenhälften vorzunehmen. Durch ein kleines Loch in einer der Schalenhälften wird dabei mittels einer kleinen Düse eine dosierte Menge Schaum eingespritzt. Nach erfolgter Expansion sind sowohl die beiden Hohlkörper ausgefüllt als auch miteinander verbunden, und es kann kein Wasser eindringen.

Diese neuen Ausgestaltungen bieten den fertigungstechnischen Vorteil, auf der Grundlage eines einzigen Basiskörpers mit einfachen Mitteln unterschiedliche Posenformen bzw. unterschiedliche Schwimmerformen zu erzielen, indem die beiden Schalenhälften nach belieben ausgebildet sein können.

Es wurde weiter oben schon erwähnt, daß sich die Lebensdauer der Batterie durch die Verwendung der Blinkschaltung um ein Vielfaches erhöhen läßt. Dies gilt auch unter Berücksichtigung des Umstandes, daß der elektronische Schalter selbst einen gewissen Energiebedarf erfordert, der allerdings vernachlässigbar gering ist. Die Betriebsdauer der blinkenden Pose erhöht sich gegenüber den bekannten Leuchtposen je nach Blinkfrequenz um das 10 -20 fache. In praktischen Versuchen hat sich gezeigt, daß die Lebensdauer der Batterie über 200 Stunden betragen kann, gegenüber etwa 25 Stunden bei den bekannten Posen.

Die extrem lange Lebensdauer der neuen Pose ermöglicht es, auf ein Auswechseln der Batterie und den damit verbundenen erheblichen technischen Mehraufwand zu verzichten. Daher kann der Basiskörper als einteiliger Korper ausgebildet sein, der unter anderem die Batterie als integrierten Bestandteil enthält. Wenn die Batterie leer ist, braucht der Benutzer lediglich einen neuen Basiskörper - gegebenenfalls mit zwei neuen Schalenhälften -zu kaufen. Im übrigen kann aber auch die Pose mit der verbrauchten Batterie immer noch als Tagespose verwendet werden.

Neben der äußerst einfachen und bequemen Handhabung der neuen Pose hat die Erfindung somit insgesamt auch noch einen beachtlichen wirtschaftlichen Vorteil.

Andere zweckmäßige Ausgestaltungen und vorteilhafte Weiterbildungen der Erfindung sind Gegenstand der Unteransprüche und der Zeichnung zu entnehmen.

Nachfolgend wird die Erfindung anhand des in der Zeichnung dargestellten Ausführungsbeispiels zum besseren Verständnis näher erläutert. Es zeigen:

Fig. 1 eine Ansicht einer neuartigen Pose

Fig. 2 .eine explodierte Darstellung der Pose gemäß Fig. 1 zur Verdeutlichung des Zusammenbaus der Pose,

Fig. 3 ein schematisches Blockschaltbild der innerhalb des Basiskörpers der Pose befindlichen Schaltungsanordnung.

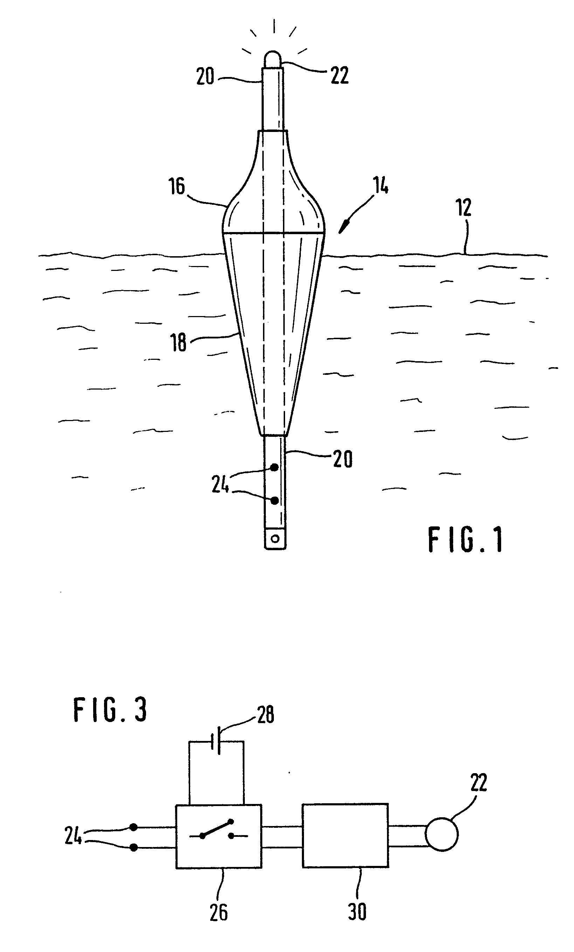

In der Darstellung gemäß Fig. 1 befindet sich die als Ganzes mit der Bezugsziffer 10 bezeichnete Pose schwimmend auf dem Wasser 12. Der Schwimmkörper 14 der Pose 10 ist durch zwei Schalenhälften 16 und 18 gebildet, die wasserdicht miteinander verbunden sind.

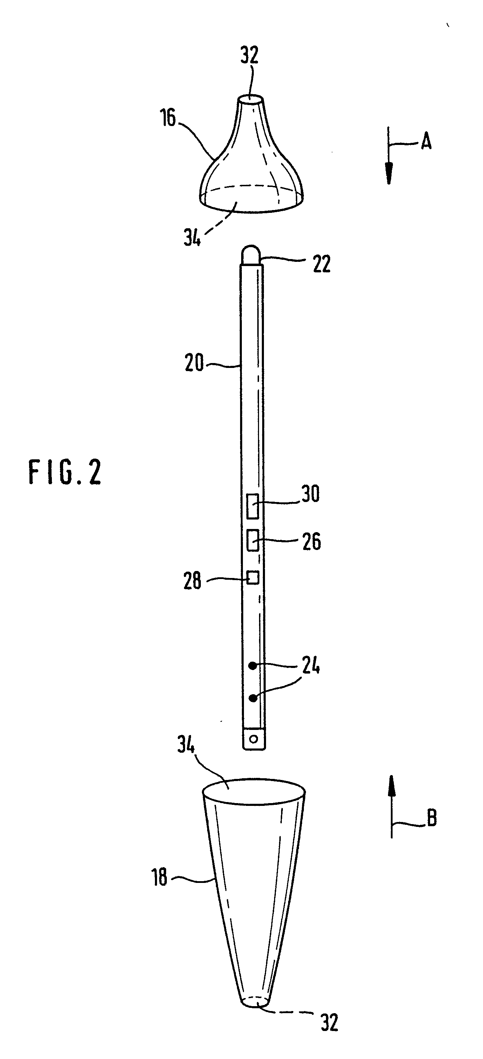

Ein wesentlicher Bestandteil der Pose 10 ist neben dem Schwimmkörper 14 ein rohrförmiger einteiliger Basiskörper 20, welcher sich oben und unten bis außerhalb des Schwimmkörpers 14 erstreckt. Am oberen Ende des Basiskörpers 20 befindet sich als Leuchtquelle eine Leuchtdiode 22, und am unteren Ende des Basiskörpers 20 sind auf dessen Oberfläche zwei Kontaktflächen 24 für einen elektronischen feuchtigkeits empfindlichen Schalter 26 (vgl. Fig. 2 und 3) angeordnet.

Innerhalb des Basiskörpers 20 befinden sich gemäß der Darstellung in Fig. 2 eine Schaltungsanordnung, welche eine Blinkschaltung 30 und den elektronischen Schalter 26 umfaßt. Ferner ist innerhalb des Basiskörpers 20 noch eine Batterie 28 angeordnet. Um den Auftrieb für die Pose 10 im Wasser zu begünstigen, ist der Basiskörper 20 zumindest teilweise hohl ausgebildet. Für den elektronischen Schalter 26 und für die Blinkschaltung 30 lassen sich integrierte Schaltungen - (IC) mit geringen räumlichen Abmessungen verwenden.

Der einfache Aufbau der neuen Pose 10 ist besonders deutlich anhand von Fig. 2 zu erkennen. Auf den Basiskörper 20 wird von oben her in Richtung des Pfeiles A die obere Schalenhälfte 16 aufgeschoben, wobei die erste Öffnung 32 den Basiskörper 20 aufnimmt und damit eine wasserdichte Verbindung herstellt.

In analoger Weise wird die untere Schalenhälfte 18 von unten her in Richtung des Pfeiles B mit der Öffnung 32 auf den Basiskörper 20 aufgeschoben. Im Endzustand liegen die beiden Schalenhälften 16 und 18 mit ihren zweiten Öffnungen 34 aneinander. Hier werden sie dann wasserdicht miteinander verklebt.

Das Prinzipschaltbild der verwendeten elektronischen Schaltung ist in Fig. 3 verdeutlicht. Die beiden auf Feuchtigkeit reagierenden Kontaktflächen 24 führen zu dem eigentlichem elektronischen Schalter 26, der in an sich bekannter Weise ausgebildet sein kann. Zur Versorgung des Schalters 26 und der Blinkschaltung 30 ist die Batterie 28 vorgesehen, die mittels des elektronischen Schalters 26 dann wirksam mit der Blinkschaltung 30 verbunden wird, wenn sich die beiden Kontaktflächen 24 im Wasser befinden.

Die Blinkschaltung 30, die ebenfalls in an sich bekannter Weise ausgebildet sein kann, ist mit der Leuchtdiode 22 verbunden, welche nach Betätigung des elektronischen Schalters 26 blinkt und dem Benutzer damit die Lage der Pose 10 anzeigt.

Entsprechend den individuellen Bedürfnissen ist es ohne weiteres möglich, die Frequenz bzw. die Blinkfolge der Blinkschaltung 30 einzustellen. Dabei kann die Frequenz gegebenenfalls so groß gewählt werden, daß der Betrachter aufgrund der Trägheit des menschlichen Auges den Eindruck eines Dauerbetriebes der Leuchtdiode 22 gewinnt.

In einer Ausführungsform der Erfindung kann für die Blinkschaltung 30 die integrierte Schaltung IC LM 3905 verwendet werden, mit welchem eine impulsartige Ansteuerung der Leuchtdiode 22 möglich ist. Die Energie der Batterie 28 wird dabei fast ausschließlich zum Leuchten der Leuchtdiode 22 ausgenutzt. Zur Anwendung kann eine Batterie mit 3 V kommen.

**Ansprüche**

1. Pose für den Angelsport, mit einer Lichtquelle, die zur Verwendung als Nachtpose über eine Schaltvorrichtung an eine Batterie anschließbar ist, sowie mit einem Schwimmkörper, dadurch gekennzeichnet, daß die Lichtquelle (22) von einer Blinkschaltung (30) angesteuert ist, und daß die Schaltvorrichtung durch einen feuchtigkeitsempfindlichen elektronischen Schalter (26) gebildet ist.

2. Pose nach Anspruch 1, dadurch gekennzeichnet , daß sie einen inneren rohrförmigen Basiskörper (20) umfaßt, der sich bis außerhalb des Schwimmkörpers (14) erstreckt.

3. Pose nach Anspruch 2, dadurch gekennzeichnet, daß der rohrförmige Basiskörper (20) die Lichtquelle (22), die Batterie (28), die Blinkschaltung (30) und den auf Feuchtigkeit reagierenden elektronischen Schalter (26) umfaßt.

4. Pose nach Anspruch 3, dadurch gekennzeichnet, daß der Basiskörper (20) als einteiliger geschlossener Körper ausgebildet ist, welcher die Lichtquelle (22), die Batterie (28), die Blinkschaltung (30) und den auf Feuchtigkeit reagierenden elektronischen Schalter (26) als integrierte Bestandteile enthält.

5. Pose nach einem der vorhergehenden Ansprüche 2 -4, dadurch gekennzeichnet, daß in der Außenwandung des sich unterhalb des Schwimmkörpers (14) erstreckenden Teils des Basiskörpers (20) zwei Kontaktflächen (24) des elektronischen Schalters (26) angeordnet sind.

6. Pose nach einem der vorhergehenden Ansprüche 1 -5, dadurch gekennzeichent, daß der Schwimmkörper (14) durch zwei hohle Schalenhälften (16, 18) gebildet ist, die jeweils mit einer ersten Öffnung (32) von entgegengesetzten Seiten her auf den Basiskörper (20) wasserdicht aufschiebbar sind, und die an ihrem nach Aufbringung auf dem Basiskörper (20) direkt gegenüberliegenden zweiten Öffnungen (34) miteinander wasserdicht verklebbar sind.

7. Pose nach einem der vorhergehenden Ansprüche 1 -6, dadurch gekennzeichnet, daß die Blinkschaltung (30) und der elektronische Schalter (26) durch eine integrierte Schaltung (IC) gebildet sind.

8. Pose nach einem der vorhergehenden Ansprüche 1 -7, dadurch gekennzeichnet, daß die Frequenz der Blinkschaltung (30) bzw. deren Blinkfolge einstellbar ist.

9. Pose nach einem der vorhergehenden Ansprüche 1 -8, dadurch gekennzeichnet, daß die Lichtquelle (22) eine Leuchtdiode ist.

10. Pose nach einem der vorhergehenden Ansprüche 1 -9, dadurch gekennzeichnet, daß der Basiskörper (20) und der Schwimmkörper (14) aus Kunststoff bestehen.

11. Pose nach einem der vorhergehenden Ansprüche 1 -10, dadurch gekennzeichnet, daß die beiden auf den Basiskörper (20) aufgeschobenen Schalenhälften (16,18) ausgeschäumt sind, wodurch der Hohlraum ausgefüllt und die beiden Schalenhälften (16,18) wasserdicht miteinander verbunden sind.

FIG.1

FIG.3

**FIG.2**

**Europäisches Patentamt**

**EUROPÄISCHER RECHERCHENBERICHT**

Nummer der Anmeldung

EP 87 10 1527

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | SOVIET INVENTIONS ILLUSTRATED, Sektion Agrikultur, Woche 8524, 25. Juli 1985, Zusammenfassungsnr. 145494 P14, Derwent Publications Ltd., London, GB; & SU - A - 1 127 557 (LAPCHINSKII SV) 07.12.1984 | 1 | A 01 K 93/00 |
| A | idem | 6 | |
| | --- | | |
| Y | DE-U-8 325 436 (D. SCHEUFELE) * vollständiges Dokument * | 1 | |
| A | | 9 | |
| | --- | | |
| A | US-A-3 798 822 (R.M. LAMPUS) * Ansprüche, Figuren * | 4,10 | RECHERCHIERTE SACHGEBIETE (Int. Cl.4) |
| | --- | | A 01 K 91/00 |
| A | DE-U-7 501 447 (W. SCHOLZ) * vollständiges Dokument * | 1-3,5, 9 | A 01 K 93/00 |
| | ----- | | |

Der vorliegende Recherchenbericht wurde für alle Patentansprüche erstellt.

| Recherchenort | Abschlußdatum der Recherche | Prüfer |
|---|---|---|
| BERLIN | 29-05-1987 | WUNDERLICH J E |